# EUROPÄISCHE PATENTSCHRIFT

(11) **EP 1 174 015 B1**
(45) Veröffentlichungstag und Bekanntmachung des Hinweises auf die Patenterteilung: **27.10.2004**
(21) Anmeldenummer: 01116459.7
(22) Anmeldetag: 07.07.2001
(51) Int. Cl.: A01B 45/00

(54) **Verfahren und Vorrichtung zum Abtrocknen von Grasflächen**
Method and apparatus for drying lawns
Méthode et dispositif pour sécher un gazon

(30) Priorität: 12.07.2000 DE 10033896; 12.06.2001 DE 10128455
(43) Veröffentlichungstag der Anmeldung: 23.01.2002
(73) Patentinhaber: Erwig, Wilhelm, 45768 Marl-Polsum (DE)
(72) Erfinder: Erwig, Wilhelm, 45768 Marl-Polsum (DE)

(56) Entgegenhaltungen:
- GB-A- 427 972
- GB-A- 506 991
- GB-A- 1 459 594
- US-A- 2 587 424
- US-A- 2 748 557

## Beschreibung

Die Erfindung betrifft ein Verfahren und eine Vorrichtung zum Abtrocknen von nassen, mit Halmen bestandenen Bodenflächen, insbesondere von Rasenflächen. Hierbei wird aber auch an ähnlich strukturierte künstliche Bodenflächen gedacht.

Solche Bodenflächen sind häufig in den frühen Morgenstunden durch Tau und zu allen Zeiten durch Regen oder durch notwendige künstliche Bewässerung naß. Viele dieser Bodenflächen müssen dann begangen werden, was zur Folge hat, daß das Schuhwerk durchnäßt wird. Dienen die Bodenflächen dem Sport oder als Spielplatz für Kinder, ist nicht nur das Schuhwerk, sondern bald auch die Kleidung durchnäßt. Außerdem sind solche Bodenflächen glatt und daher gefährlich, vor allem beim Betreiben von Sportarten, die ein schnelles Laufen erfordern. Stürze und Verletzungen behindern und gefährden dann die Sportler, wenn nicht sogar auf die Ausübung des Sports für etliche Stunden verzichtet werden muß. Bei einer natürlichen Rasenfläche, die naß ist und in diesem Zustand gemäht werden muß, treten erhebliche Schwierigkeiten beim Mähen auf, und zwar beim Mähen mit solchen Rasenmähern, die das abgeschnittene Gras in einer Auffangvorrichtung sammeln. Bei ihnen verstopfen die abgeschnittenen, aber durch die Nässe aneinander und an den Wandungen des Rasenmähers haftenden Grashalme dessen das Gras führende Kanäle und vor allem seine Auswurföffnung. Das Mähen muß ständig zum Entfernen der Verstopfungen unterbrochen werden. Trotzdem gelangt ein großer Teil des abgeschnittenen Grases nicht in die Auffangvorrichtung, sondern bleibt auf der Rasenfläche liegen und muß in einem zweiten Arbeitsgang entfernt werden.

Der Erfindung liegt das Problem zugrunde, ein Verfahren und eine Vorrichtung zu schaffen, mit dem bzw. der eine mit Halmen bestandene Bodenfläche, insbesondere eine natürliche Rasenfläche, möglichst schnell abgetrocknet werden kann.

Dieses Problem wird erfindungsgemäß, wie beansprucht, dadurch gelöst, daß die Tropfen von den Halmen mit kammartigen Ansätzen abgestreift, an den Ansätzen entlang zu deren Unterkanten hin und von dort auf die Bodenfläche abgeführt werden. Hierdurch wird erreicht, daß der weitaus größte Teil der Feuchtigkeit sofort von den Halmen auf die Bodenfläche und von dort in den Boden hinein abgeleitet wird. Die an den Halmen anhaftenden, relativ großen Tropfen bilden den größten Teil der störenden Feuchtigkeit. Greift man nicht ein, dauert es lange bis Wind und Sonne die viel Wasser enthaltenden Tropfen aufgetrocknet haben. Werden die Tropfen jedoch erfindungsgemäß von den Halmen abgestreift und wird ihr Wasser der Bodenfläche zugeführt, wo es der Boden aufnimmt, dann verbleibt an den Halmen allenfalls ein dünner Feuchtigkeitsfilm, der wegen seiner großen Oberfläche und seiner geringen Wassermenge von Wind und Sonne schnell aufgetrocknet wird.

Nach Anwendung des erfindungsgemäßen Verfahrens ist die Bodenfläche bereits kurze Zeit später begehbar, ohne daß das Schuhwerk nennenswert feucht wird. Für Spiel und Sport steht die Bodenfläche viel früher als sonst sowie weitgehend trocken und damit ungefährlich wieder zur Verfügung, was vor allem bei durch Regenschauer unterbrochenen Sportveranstaltungen von großem Vorteil ist. Außerdem kann eine zunächst nasse Rasenfläche schon eine halbe bis eine Stunde nach Anwendung des Verfahrens mit einem Rasenmäher mit Auffangvorrichung ohne Probleme gemäht werden. Besonders in Zeiten mit schlechter Witterung, in denen die Sonne nur kurz oder überhaupt nicht scheint, es kühl ist, eine hohe Luftfeuchtigkeit herrscht, wenig Wind weht und es besonders lange dauert, bis eine Rasenfläche von selbst trocknet, bewährt sich das erfindungsgemäße Verfahren. Andererseits hilft es in Trockenzeiten die Bodenfläche zu bewässern. Bei rechtzeitiger Anwendung am Morgen wird der Tau von den Halmen abgestreift, wo er sonst weitgehend nutzlos verdunsten würde. Statt dessen wird er dem Boden zugeführt, wo er zu den Wurzeln der Gräser gelangen kann.

Bei dem erfindungsgemäßen Verfahren empfiehlt es sich, die kammartigen Ansätze durch die von den Halmen gebildete Schicht im wesentlichen parallel zur Bodenfläche zu ziehen oder zu schieben. So lassen sich die Tropfen am besten von den Halmen abstreifen und der Bodenfläche zuführen.

Gegenstand der Erfindung ist auch eine Vorrichtung, wie beansprucht, zum Durchführen des neuen Verfahrens, die einen über die Halme der Bodenfläche zieh- oder schiebbaren Holm aufweist, dessen Unterseite mit einer Vielzahl von kammartigen Ansätzen versehen ist, die jeweils mehrere nach unten vorragende Zinken besitzen, wobei zwischen den Zinken Zwischenräume vorhanden sind, die maximal nur geringfügig breiter, vorzugsweise jedoch schmaler als die durchschnittliche Breite der Halme bemessen sind. Durch die schmalen Zwischenräume kommen die Oberflächen der Halme in engem Kontakt mit den Zinken, die dabei die Tropfen von den Halmen abstreifen. Das Wasser fließt dann an den Zinken entlang nach unten zu deren Unterkanten hin und tropft von dort auf die Bodenfläche oder wird auf diese abgeleitet, wenn die Zinken die Bodenfläche berühren.

Es hat sich als zweckmäßig erwiesen, wenn die Länge der nach unten vorragenden Zinken der kammartigen Ansätze entgegen der Bewegungsrichtung, also zur Hinterkante des Holmes hin, gleichförmig, ungleichförmig oder in Stufen zunimmt. Die Zinken lassen sich dann leichter und für die Halme schonender durch die von ihnen gebildete Schicht der Bodenfläche ziehen. Außerdem fließt das Wasser an den nach unten geneigten Unterkanten der Zinken entlang, sammelt sich an den tiefsten Stellen zu dicken Tropfen, die dann sehr bald auf die Bodenfläche fallen.

In weiterer Ausgestaltung der Erfindung sind die kammartigen Ansätze mit Abstand nebeneinander und in mehreren Reihen hintereinander, jeweils auf Lücke zueinander versetzt angeordnet. So erhalten die Halme beim Passieren des Holms immer wieder die Gelegenheit sich aufzurichten und eine neue Position einzunehmen, bevor sie von den Zinken eines der nachfolgenden kammartigen Ansätze erfaßt werden, die dann in anderer Weise an ihnen entlang streichen.

Empfehlenswert ist es, wenn der Holm an seiner Hinterkante mit einem als Abstreiferleiste ausgebildeten Halteelement versehen ist, das eine Vielzahl von dicht nebeneinander angeordneten, zur Bodenfläche hin abgebogene Enden aufweisenden, in vertikaler Richtung elastisch nachgiebigen, im Querschnitt flachen Abstreiferhaken besitzt. Bei dieser Ausführungsform streichen die abgebogenen Enden der Abstreiferhaken nach dem Passieren der kammartigen Ansätze noch einmal über die Oberflächen der Halme und streifen eventuell noch vorhandene restliche Tropfen ab. Dabei ist es sinnvoll, wenn die Abstreiferhaken unterschiedliche horizontale Längen besitzen und / oder ihre Enden unterschiedlich weit zur Bodenfläche hin vorragen. Auf diese Weise werden mehr Halme und mehr Halmoberflächen von den Abstreiferhaken überstrichen.

Bei einer anderen Ausführungsform der Erfindung besitzt der Holm im Bereich seiner Hinterkante dicht nebeneinander eine Vielzahl kurzer Längenabschnitte von Ketten, die jeweils mit nur einem ihrer beiden Endabschnitte an der Hinterkante des Holms befestigt sind und von denen die anderen Endabschnitte auf den Halmen der Bodenfläche aufliegen. Die Ketten erfüllen denselben Zweck wie die oben erwähnten Abstreiferhaken. Die freien Endabschnitte der Ketten streichen nach dem Passieren der kammartigen Ansätze noch einmal über die Oberflächen der Halme und streifen eventuell noch vorhandene restliche Tropfen ab. Solche Längenabschnitte von Ketten lassen sich mit geringem Aufwand anfertigen und auch einfach im Bereich der Hinterkante des Holms an diesem befestigen. Außerdem sind derartige Kettenabschnitte unempfindlich gegen Beschädigungen und stören beim Lagern der Vorrichtung nicht.

Es empfiehlt sich, den Holm auf seiner gesamten Breite an seiner Hinterkante mit Längenabschnitten von Ketten zu versehen. Auch die Abstreiferhaken können über die gesamte Breite des Holms verteilt sein. Hierdurch wird die Bodenfläche auf der gesamten Breite des Holms gleichmäßig getrocknet.

Zweckmäßig ist es, wenn die Ketten als Gliederketten ausgebildet sind. Solche Ketten besitzen keine scharfen Kanten, welche die Halme beschädigen könnten. Außerdem sind sie in den unterschiedlichsten Größen erhältlich öder herstellbar.

Darüber hinaus ist es sinnvoll, die Längenabschnitte von Ketten aus einem nicht korrodierenden metallischen Werkstoff herzustellen. Sie besitzen dann ein ausreichend großes Eigengewicht, um genügend fest auf den Halmen aufzuliegen und hinterlassen keine Rost- oder Korrosionsspuren.

in weiterer Ausgestaltung der Erfindung können alle oder mehrere Längenabschnitte von Ketten an der Hinterkante des Holms mittels eines gemeinsamen Halteelementes leicht lös- oder auswechselbar befestigt sein. Die Ketten könnten dabei an einem oder mehreren leistenartigen Halteelementen befestigt werden, die sich ihrerseits in Befestigungsmöglichkeiten am Holm einschieben oder einhängen lassen.

Es ist ferner vorteilhaft, wenn der Holm an seiner Hinterkante und über seine gesamte Breite verteilt mehrere Druckluft führende Luftdüsen besitzt, deren Auslaßöffnungen zur Bodenfläche hin ausgerichtet sind. Dann läßt sich mit der Druckluft, eventuell auch mit erwärmter Druckluft, noch vorhandene Restfeuchtigkeit von den Oberflächen der Halme blasen und deren Trocknung beschleunigen. Günstig ist es dabei, die Luftdüsen schlitzartig auszubilden und in mehreren Reihen hintereinander sowie auf Lücke versetzt anzuordnen.

Bei einer komfortablen Ausführungsform der Erfindung ist der Holm an einem fahrbaren Arbeitsgerät montiert. Es ist dann besonders leicht, den Holm über die Bodenfläche zu bewegen, insbesondere wenn das fahrbare Arbeitsgerät einen Fahrantrieb besitzt. Außerdem läßt sich auf einem solchen fahrbaren Arbeitsgerät eine Einrichtung zum Erzeugen von Druckluft anordnen.

Als Alternative dazu, kann der Holm auch mit einem von Hand zu führenden Zugmittel versehen sein. Man erhält so ein preiswertes, relativ einfaches, aber wirkungsvolles Handgerät, daß von Hand geführt werden kann und für kleine Rasenflächen völlig ausreicht.

Zweckmäßig ist es, den Holm in seiner Breite mehrteilig auszubilden und die Holmteile in unterschiedlicher Anzahl wahlweise zu verschiedenen Gesamtbreiten zusammenzusetzen. Vorteilhaft ist auch, wenn die äußeren Holmteile hochklappbar sind. So läßt sich die Gesamtbreite des Holmes der Breite der jeweiligen Bodenflächen anpassen, was vor allem bei verwinkelten Bodenflächen vorteilhaft ist. Dabei kann es sinnvoll sein, wenn die Holmteile unterschiedliche Breiten besitzen.

In manchen Fällen empfiehlt es sich, den Holm auf seiner Oberseite mit Gewichten zu versehen. Dies gilt vor allem bei solchen Vorrichtungen, die nicht an einem meist ausreichend schweren fahrbaren Arbeitsgerät montiert sind und bei denen der Holm wegen seiner geringen Abmessungen und/oder wegen der Art seines Werkstoffes zu leicht ist und folglich die Zinken der kammartigen Ansätze nicht tief genug in die von den Halmen gebildete Schicht eindringen.

In den Zeichnungen ist die erfindungsgemäße Vorrichtung anhand von Ausführungsbeispielen dargestellt. Es zeigt:
- Figur 1: einen erfindungsgemäßen Holm in der Draufsicht;
- Figur 2: den Holm nach Figur 1 in der Untersicht;
- Figur 3: die Stelle bei "A" von Figur 2 in vergrößertem Maßstab;
- Figur 4: einen Schnitt nach der Linie IV-IV der Figur 3;
- Figur 5: den Holm nach Figur 1 in der Seitenansicht;
- Figur 6: einen Schnitt nach der Linie VI-VI der Figur 1;
- Figur 7: einen Schnitt entsprechend Figur 6, jedoch mit Luftdüsen anstelle von Abstreiferhaken;
- Figur 8: den Holm mit Kettenabschnitten, sonst entsprechend Figur 1;
- Figur 9: den Holm mit Kettenabschnitten, sonst entsprechend Figur 2;
- Figur 10: den Holm mit Kettenabschnitten, sonst entsprechend Figur 5.

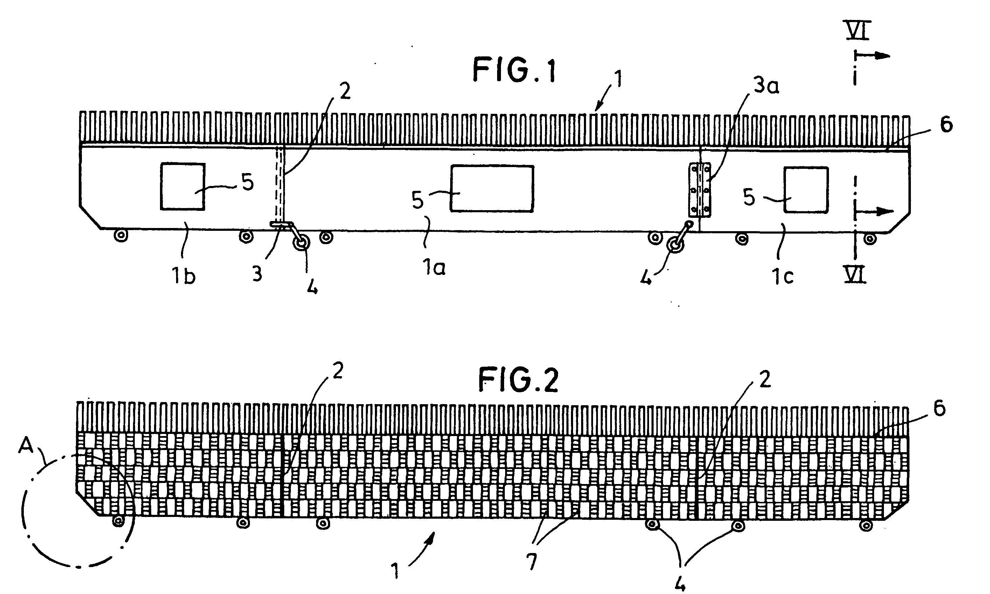

In Figur 1 ist ein Holm 1 dargestellt, der im wesentlichen die Form eines Brettes besitzt, aber nicht unbedingt aus Holz bestehen muß. Er kann auch aus einem Kunststoff, einem Metall, einer Metallegierung oder aus einer Kombination der genannten Werkstoffe hergestellt sein. Bei der dargestellten Ausführungsform besteht der Holm 1 aus drei Holmteilen 1a, 1b und 1c. Der äußere Holmteil 1b ist mit dem mittleren Holmteil 1a über eine Führung 2 lösbar verbunden. Als Führung 2 besitzen die Holmteile 1a und 1b stimseitig entweder eine hinterschnittene Nut oder eine ebenfalls stirnseitig angeordnete, entsprechend hinterschnittene Leiste. In die Nut ist die Leiste des jeweils benachbarten Holmteils 1a oder 1b eingeschoben. Eine oder mehrere U-förmige Verriegelungsklammern 3, deren Schenkel in Bohrungen beider Holmteilen 1a und 1b eingesteckt sind, verhindern ein unbeabsichtigtes Lösen der Holmteile 1a und 1b voneinander. Als Alternative zu dieser Verbindung sind die Holmteile 1a und 1c über ein Scharnier 3a miteinander verbunden. Das Scharnier 3a erlaubt ein Hochklappen des Holmteils 1c, insbesondere an solchen Stellen, die schmaler sind als die Gesamtbreite des Holmes 1.

Mehrere Ösen 4 an der Vorderkante des Holms 1 dienen zum Anbringen eines Zugmittels, beispielsweise eines nicht dargestellten Seiles, mit dem der Holm 1 über die Bodenfläche gezogen werden kann. Es ist jedoch auch möglich, ein geeignetes, nicht dargestelltes Gestänge am Holm 1 anzubringen, insbesondere zur Befestigung des Holms 1 an einem fahrbaren Gerät.

Auf der Oberseite des Holms 1 sind gleichmäßig verteilt Gewichte 5 gegebenenfalls lösbar und damit auswechselbar befestigt. An der Hinterkante des Holms 1 befindet sich als Halteelement 6 eine Abstreiferleiste, die weiter unten noch näher beschrieben ist.

Die Figur 2 zeigt, daß sich auf der Unterseite des Holms 1 eine Vielzahl von Ansätzen 7 befinden. Diese Ansätze 7 sind mit Abstand nebeneinander und in mehreren Reihen hintereinander, jeweils auf Lücke zueinander versetzt angeordnet.

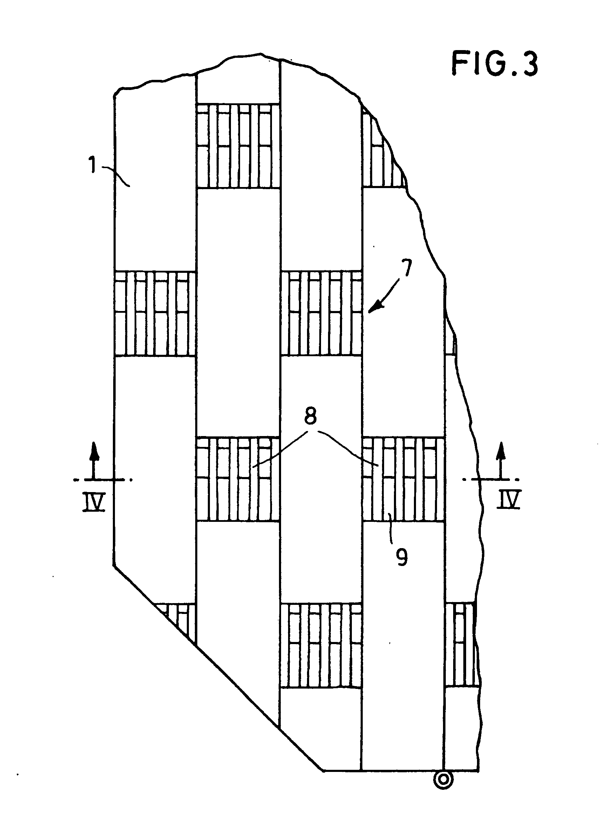

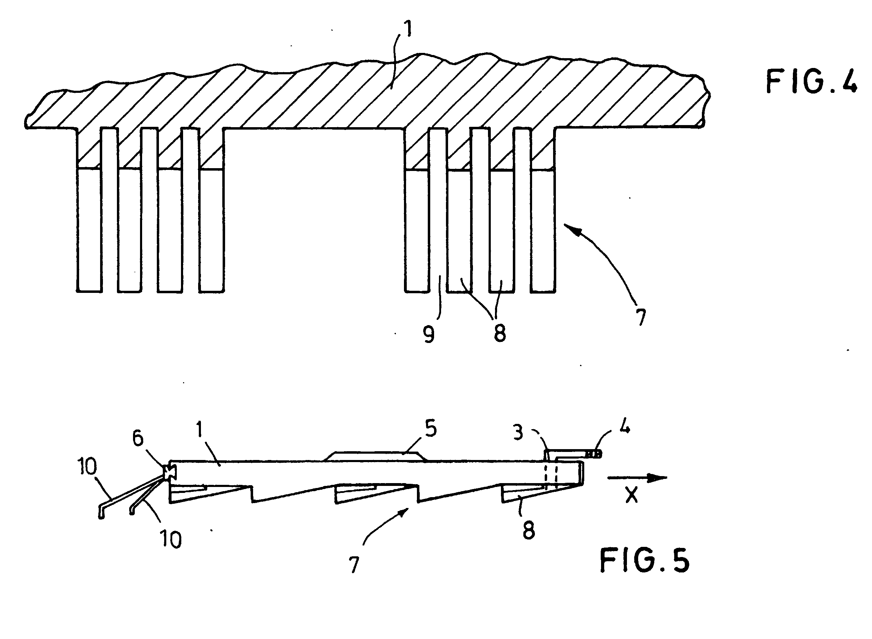

In Figur 3 ist, als Alternative zu Figur 2, zwischen jeder Reihe mit Ansätzen 7 eine Reihe ohne Ansätze 7 vorgesehen. Außerdem ist hier zu erkennen, daß die Ansätze 7 kammartig ausgebildet sind. Sie verfügen über mehrere in Betriebsposition nach unten vorragende Zinken 8. Das ist besonders deutlich in Figur 4 zu erkennen. Zwischen den Zinken 8 sind Zwischenräume 9 vorhanden, die maximal nur geringfügig breiter, vorzugsweise jedoch schmaler als die durchschnittliche Breite der Halme bemessen sind. Die Halme können trotzdem die Zwischenräume 9 passieren, weil sie sich, den Zinken 8 nachgebend, um ihre Längsachsen drehen. Sie werden dann mit ihren dünnen Schmalseiten voran durch die Zwischenräume 9 geführt. Dabei kommen die Halme mit ihren größeren Flächen in direktem Kontakt mit den Zinken 8, wobei die an den Halmen haftenden Tropfen abgestreift werden.

Die Figur 5 zeigt, daß die Länge der nach unten vorragenden Zinken 8 der kammartigen Ansätze 7 entgegen der mit einem Pfeil X gekennzeichneten Bewegungsrichtung und damit zur Hinterkante des Holmes 1 hin, zunimmt.

Auch hier ist an der Hinterkante des Holmes 1 als Halteelement 6 die Abstreiferleiste zu erkennen.

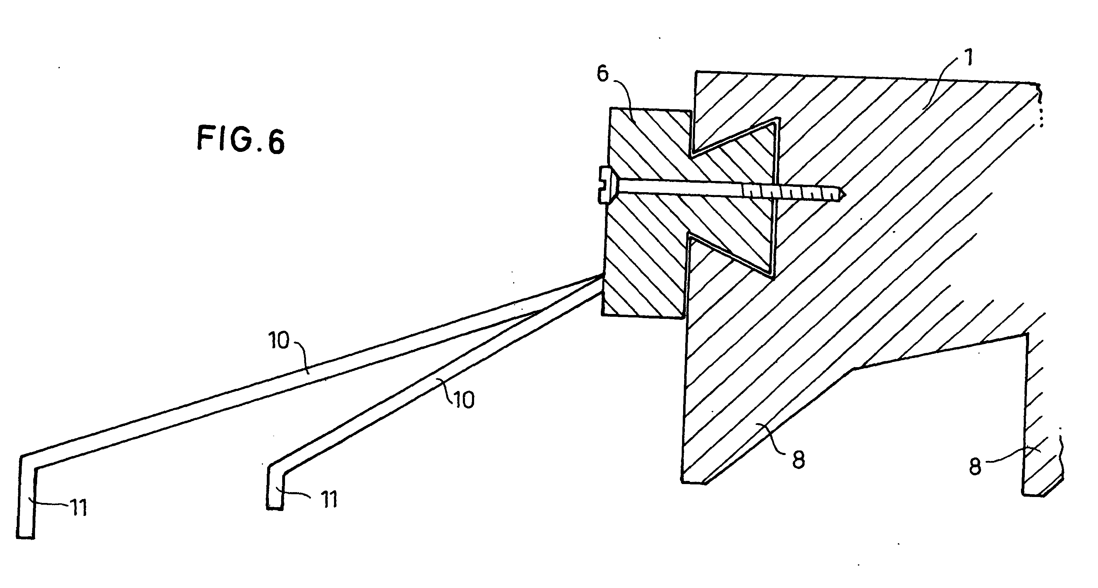

Bei der Ausführungsform nach Figur 6 besteht das Halteelement 6 aus einer Abstreiferleiste, die im Schnitt und vergrößert dargestellt ist. Auf der gesamten Breite des Holms 1 besitzt die Abstreiferleiste eine Vielzahl von Abstreiferhaken 10, die dicht nebeneinander angeordnet sind. Die Abstreiferhaken 10 weisen zur Bodenfläche hin abgebogene Enden 11 auf und sie sind wegen ihrer geringen Dicke und der Elastizität ihres Werkstoffes in vertikaler Richtung nachgiebig. Sie besitzen außerdem unterschiedliche Längen und ihre Enden 11 ragen unterschiedlich weit nach unten zur Bodenfläche hin vor. Im Ruhezustand befinden sich die Unterkanten der abgebogenen Enden 11 unterhalb der Unterkanten der Zinken 8. Das Halteelement 6, hier in Form einer Abstreiferleiste, ist lösbar und damit auswechselbar an dem Holm 1 befestigt.

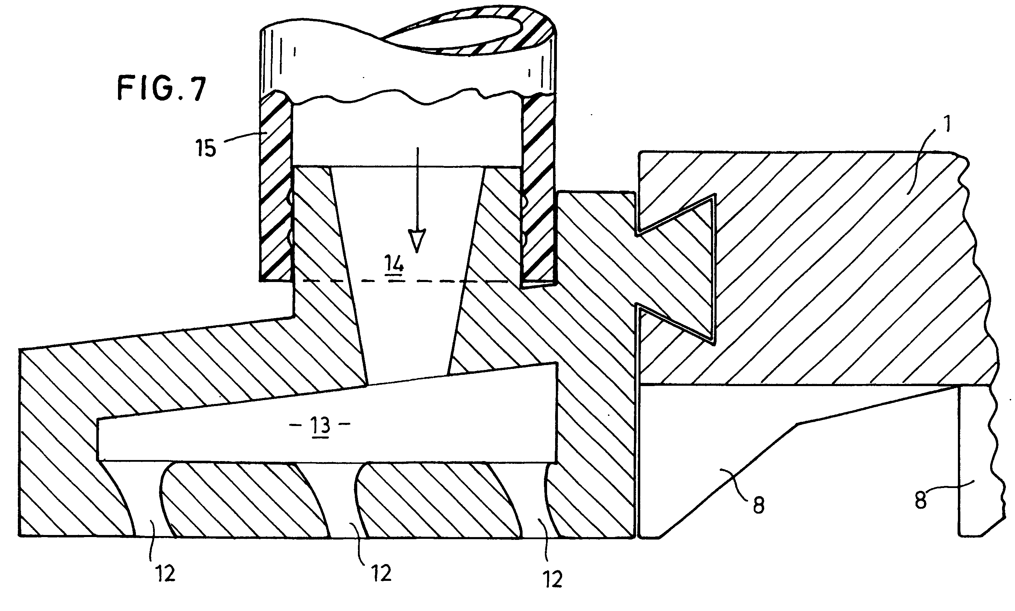

Die Figur 7 zeigt, daß anstelle einer Abstreiferleiste der Holm 1 an seiner Hinterkante und über seine gesamte Breite verteilt mehrere Druckluft führende Luftdüsen 12 besitzen kann, deren Auslaßöffnungen zur Bodenfläche hin ausgerichtet sind. Die Luftdüsen 12 sind schlitzartig ausgebildet und in mehreren Reihen hintereinander sowie auf Lücke versetzt angeordnet. Ein Kanal 13 oberhalb der Luftdüsen 12 verteilt die Druckluft, die durch eine oder mehrere Einlaßöffnungen 14 zugeführt wird. Ein Schlauch 15 stellt die Verbindung zu einem die Druckluft erzeugenden Aggregat her. Auch die Luftdüsen 12 sind lösbar und damit auswechselbar an dem Holm 1 befestigt.

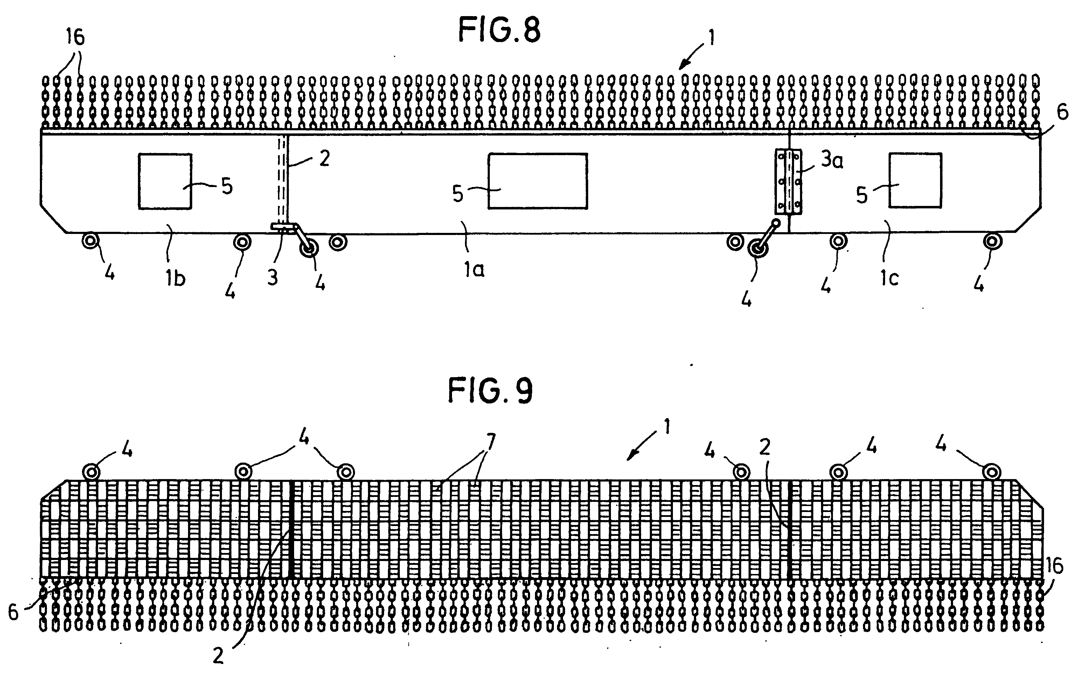

Die Figuren 8 und 9 zeigen eine andere Ausführungsform der Erfindung, bei welcher der Holm 1 an seiner Hinterkante statt der Abstreiferhaken 10 kurze Längenabschnitte von Ketten 16 besitzt. Die Ketten 16 sind jeweils nur mit einem ihrer beiden Endabschnitte am Halteelement 6 befestigt, das hier leistenartig ausgebildet ist und in eine Nut an der Hinterkante des Holms 1 eingeschoben ist. Außer dem Einschieben in eine Nut sind noch zahlreiche andere Ausbildungen eines Halteelementes 6 und andere Befestigungsmöglichkeiten am Holm denkbar. Bei einem mehrteiligen Holm 1 ist auch das Halteelement 6 mehrteilig.

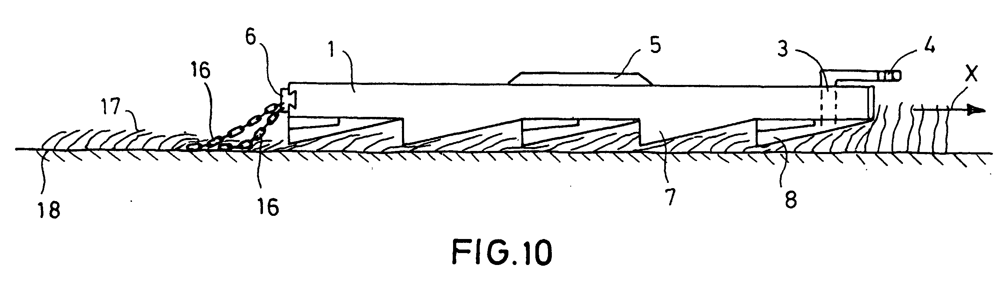

Figur 10 zeigt, daß an dem Halteelement 6, weiches als Teil der Hinterkante des Holms 1 anzusehen ist, dicht nebeneinander eine Vielzahl kurzer Längenabschnitte von Ketten 16 angeordnet sind, die mit ihren freien Endabschnitten auf den Halmen 17 der Bodenfläche 18 aufliegen.

## Patentansprüche

1. Verfahren zum Abtrocknen von nassen, mit Halmen (17) bestandenen Bodenflächen (18), insbesondere von Rasenflächen, bei dem die Tropfen von den Halmen (17) mit kammartigen Ansätzen (7), mit nach unten vorragenden Zinken deren Länge entgegen der Bewegungsrichtung zunimmt, abgestreift, an den Ansätzen (7) entlang zu deren Unterkanten hin und von dort auf die Bodenfläche (18) abgeführt werden.

2. Verfahren nach Anspruch 1, **dadurch gekennzeichnet, daß** die kammartigen Ansätze (7) durch die von den Halmen (17) gebildete Schicht im wesentlichen parallel zur Bodenfläche (18) gezogen oder geschoben werden.

3. Vorrichtung zum Durchführen des Verfahrens nach Anspruch 1 oder 2, mit einem über die Halme der Bodenfläche zieh- oder schiebbaren Holm, **dadurch gekennzeichnet, daß** die Unterseite des Holms (1) mit einer Vielzahl von kammartigen Ansätzen (7) versehen ist, die jeweils mehrere nach unten vorragende Zinken (8), deren Länge entgegen der Bewegungsrichtung zunimmt, besitzen, wobei zwischen den Zinken (8) Zwischenräume (9) vorhanden sind, die maximal nur geringfügig breiter, vorzugsweise jedoch schmaler als die durchschnittliche Breite der Halme (17) bemessen sind.

4. Vorrichtung nach Anspruch 3, **dadurch gekennzeichnet, daß** die Länge der nach unten vorragenden Zinken (8) der kammartigen Ansätze (7) entgegen der Bewegungsrichtung (X), also zur Hinterkante des Holmes (1) hin, gleichförmig, ungleichförmig oder in Stufen zunimmt.

5. Vorrichtung nach Anspruch 3 oder 4, **dadurch gekennzeichnet, daß** die kammartigen Ansätze (7) mit Abstand nebeneinander und in mehreren Reihen hintereinander, jeweils auf Lücke zueinander versetzt angeordnet sind.

6. Vorrichtung nach einem der Ansprüche 3 bis 5, **dadurch gekennzeichnet, daß** der Holm (1) an seiner Hinterkante mit einem als Abstreiferleiste ausgebildeten Halteelement (6) versehen ist, das eine Vielzahl von dicht nebeneinander angeordneten, zur Bodenfläche (18) hin abgebogene Enden (11) aufweisenden, in vertikaler Richtung elastisch nachgiebigen, im Querschnitt flachen Abstreiferhaken (10) besitzt.

7. Vorrichtung nach Anspruch 6, **dadurch gekennzeichnet, daß** die Abstreiferhaken (10) unterschiedliche horizontale Längen besitzen und/oder ihre Enden (11) unterschiedlich weit zur Bodenfläche (18) hin vorragen.

8. Vorrichtung nach einem der Ansprüche 3 bis 5, **dadurch gekennzeichnet, daß** der Holm (1) im Bereich seiner Hinterkante dicht nebeneinander eine Vielzahl kurzer Längenabschnitte von Ketten (16) besitzt, die jeweils mit nur einem ihrer beiden Endabschnitte an der Hinterkante des Holms (1) befestigt sind und von denen die anderen Endabschnitte auf den Halmen (17) der Bodenfläche (18) aufliegen.

9. Vorrichtung nach Anspruch 8, **dadurch gekennzeichnet, daß** der Holm (1) auf seiner gesamten Breite an der Hinterkante mit Längenabschnitten von Ketten (16) versehen ist.

10. Vorrichtung nach Anspruch 8 oder 9, **dadurch gekennzeichnet, daß** die Ketten (16) als Gliederketten ausgebildet sind.

11. Vorrichtung nach einem der Ansprüche 8 bis 10, **dadurch gekennzeichnet, daß** die Längenabschnitte von Ketten (16) aus einem nicht korrodierenden metallischen Werkstoff bestehen.

12. Vorrichtung nach einem der Ansprüche 8 bis 11, **dadurch gekennzeichnet, daß** alle oder mehrere Längenabschnitte von Ketten (16) an der Hinterkante des Holms (1) mittels eines gemeinsamen Halteelementes (6) leicht lös- oder auswechselbar befestigt sind.

13. Vorrichtung nach einem der Ansprüche 3 bis 12, **dadurch gekennzeichnet, daß** der Holm (1) an seiner Hinterkante und über seine gesamte Breite verteilt mehrere Druckluft führende Luftdüsen (12) besitzt, deren Auslaßöffnungen zur Bodenfläche (18) hin ausgerichtet sind.

14. Vorrichtung nach Anspruch 13, **dadurch gekennzeichnet, daß** die Luftdüsen (12) schlitzartig ausgebildet und in mehreren Reihen hintereinander sowie auf Lücke versetzt angeordnet sind.

15. Vorrichtung nach einem der Ansprüche 3 bis 14, **dadurch gekennzeichnet, daß** der Holm (1) an einem fahrbaren Arbeitsgerät montiert ist.

16. Vorrichtung nach einem der Ansprüche 3 bis 14, **dadurch gekennzeichnet, daß** der Holm (1) mit einem von Hand zu führenden Zugmittel versehen ist.

17. Vorrichtung nach einem der Ansprüche 3 bis 16, **dadurch gekennzeichnet, daß** der Holm (1) in seiner Breite mehrteilig ausgebildet ist und die Holmteile (1a, 1b, 1c) in unterschiedlicher Anzahl wahlweise zu verschiedenen Gesamtbreiten zusammenzusetzen sind.

18. Vorrichtung nach Anspruch 17, **dadurch gekennzeichnet, daß** die äußeren Holmteile (1b, 1c) hochklappbar sind.

19. Vorrichtung nach Anspruch 17 oder 18, **dadurch gekennzeichnet, daß** die Holmteile (1a, 1b,1c) unterschiedliche Breiten besitzen.

20. Vorrichtung nach einem der Ansprüche 3 bis 19, **dadurch gekennzeichnet, daß** der Holm (1) auf seiner Oberseite mit Gewichten (5) versehen ist.

## Claims

1. Method of drying wet ground surfaces (18) which are covered with stalks (17), in particular lawns, wherein the drops are stripped from the stalks (17) by means of comb-like projections (7), with downwardly projecting tines (8), the length of which increases in the direction opposite the direction of movement, the drops are carried off along the projections (7) towards the lower edges thereof from where they are guided away on to the ground surface (18).

2. Method as claimed in claim 1, **characterised in that** the comb-like projections (7) are pulled or pushed through the layer, which is formed by the stalks (17), substantially in parallel with the ground surface (18).

3. Device for carrying out the method as claimed in claim 1 or 2, having a beam which can be pulled or pushed across the stalks on the ground surface, **characterised in that** the lower side of the beam (1) is provided with a multiplicity of comb-like projections (7) which each include several downwardly projecting tines (8), whose length increases in the direction opposite the direction of movement, wherein intermediate spaces (9) which at a maximum are only slightly broader but preferably narrower than the average width of the stalks (17) in dimension are provided between the tines (8).

4. Device as claimed in claim 3, **characterised in that** the length of the downwardly projecting tines (8) of the comb-like projections (7) increases uniformly, non-uniformly or in stages in the direction opposite the direction of movement (X), i.e. towards the rear edge of the beam (1).

5. Device as claimed in claim 3 or 4, **characterised in that** the comb-like projections (7) are disposed at a spaced interval adjacent one another and in several rows one behind the other, in each case offset with respect to each other with a gap therebetween.

6. Device as claimed in any of claims 3 to 5, **characterised in that** the beam (1) is provided on its rear edge with a holding element (6) which is formed as a stripping bar and which includes a multiplicity of stripping hooks (10) which are disposed closely adjacent one another, comprise ends (11) bent towards the ground surface (18), are elastically flexible in the vertical direction and have a flat cross-section.

7. Device as claimed in claim 6, **characterised in that** the stripping hooks (10) have different horizontal lengths and/or their ends (11) protrude to varying extents towards the ground surface (18).

8. Device as claimed in any of claims 3 to 5, **characterised in that** in the region of its rear edge the beam (1) comprises a multiplicity of short length portions of chains (16) arranged closely adjacent one another, which are secured in each case with only one of their two end portions to the rear edge of the beam (1) and of which the other end portions are supported on the stalks (17) on the ground surface (18).

9. Device as claimed in claim 8, **characterised in that** across its entire width the beam (1) is provided on the rear edge with length portions of chains (16).

10. Device as claimed in claim 8 or 9, **characterised in that** the chains (16) are formed as link chains.

11. Device as claimed in any of claims 8 to 10, **characterised in that** the length portions of chains (16) consist of a non-corrosive metal material.

12. Device as claimed in any of claims 8 to 11, **characterised in that** all or several length portions of chains (16) are secured to the rear edge of the beam (1) by means of a common holding element (6) in such a manner as to be readily releasable or interchangeable.

13. Device as claimed in any of claims 3 to 12, **characterised in that** the beam (1) has, on its rear edge and distributed over its entire width, several air jets (12) which carry compressed air and whose outlet orifices are directed towards the ground surface (18).

14. Device as claimed in claim 13, **characterised in that** the air jets (12) are formed in a slot-like manner and are disposed in several rows one behind the other and in an offset manner with a gap therebetween.

15. Device as claimed in any of claims 3 to 14, **characterised in that** the beam (1) is mounted on a movable working device.

16. Device as claimed in any of claims 3 to 14, **characterised in that** the beam (1) is provided with pulling means to be guided by hand.

17. Device as claimed in any of claims 3 to 16, **characterised in that** the beam (1) is formed in multiple parts across its width and the beam parts (1a, 1b, 1c) are to be assembled in various numbers optionally to form different total widths.

18. Device as claimed in claim 17, **characterised in that** the outer beam parts (lb, 1c) can be folded up.

19. Device as claimed in claim 17 or 18, **characterised in that** the beam parts (la, 1b, 1c) have different widths.

20. Device as claimed in any of claims 3 to 19, **characterised in that** the beam (1) is provided on its upper side with weights (5).

## Revendications

1. Procédé pour sécher des surfaces de sols (18) humides occupées par des brins d'herbe (17), notamment des surfaces de gazon,
**caractérisé en ce qu'**
on racle les gouttes des brins d'herbe (17) avec des accessoires en forme de peignes (7), ayant des dents (8) en saillie vers le bas et dont la longueur augmente en sens opposé à la direction du mouvement, l'évacuation se faisant sur les prolongements (7), le long de leur arête inférieure, et de là pour passer sur la surface (18) du sol.

2. Procédé selon la revendication 1,
**caractérisé en ce qu'**
on tire ou on pousse les prolongements en forme de peignes (7) à travers la couche de brins d'herbe (17), d'une manière essentiellement parallèle à la surface (18) du sol.

3. Dispositif pour la mise en oeuvre du procédé selon la revendication 1 ou 2, comportant un longeron que l'on tire ou que l'on pousse pardessus les brins d'herbe à la surface du sol,
**caractérisé en ce que**
le côté inférieur du longeron (1) comporte un ensemble de prolongements (7) en forme de peignes ayant chacun plusieurs dents (8) en saillie vers le bas et dont la longueur augmente dans la direction opposée à la direction du mouvement, des intervalles (9) subsistant entre les dents (8), ces intervalles étant au maximum légèrement plus larges, de préférence toutefois plus étroits que la largeur moyenne des brins d'herbe (17).

4. Dispositif selon la revendication 3,
**caractérisé en ce que**
la longueur des dents (8) en saillie vers le bas des prolongements (7) en forme de peignes augmente dans la direction opposée à la direction de mouvement (X), c'est-à-dire vers l'arête arrière du longeron (1), d'une manière régulière, irrégulière, ou par gradins.

5. Dispositif selon la revendication 3 ou 4,
**caractérisé en ce que**
les prolongements (7) en forme de peignes sont prévus à distance l'un à côté de l'autre et sur plusieurs rangées l'un au-dessus de l'autre, chaque fois en laissant des intervalles.

6. Dispositif selon l'une des revendications 3 à 5,
**caractérisé en ce que**
le longeron (1) comporte, au niveau de son arête arrière, un élément de fixation (6) muni d'une raclette, qui possède un grand nombre de crochets de raclage (10) de section plate, étroitement juxtaposés, ayant des extrémités (11) recourbées vers la surface (18) du sol et qui présentent une élasticité dans la direction verticale.

7. Dispositif selon la revendication 6,
**caractérisé en ce que**
les crochets de raclage (10) ont des longueurs différentes et/ou leurs extrémités (11) viennent en saillie par rapport à la surface du sol (18) avec des longueurs différentes.

8. Dispositif selon l'une des revendications 3 à 5,
**caractérisé en ce que**
le longeron (1) comporte, au niveau de son arête arrière, un grand nombre de courts segments de longueur de chaîne (16), étroitement rapprochés, et ces segments ne sont fixés que par l'un de leurs segments d'extrémité à l'arête arrière du longeron (1), les autres segments d'extrémité reposant sur les brins d'herbe (17) à la surface du sol (18).

9. Dispositif selon la revendication 8,
**caractérisé en ce que**
sur toute sa largeur le longeron (1) comporte au niveau de son arête arrière des segments de longueur de chaînes (16).

10. Dispositif selon la revendication 8 ou 9,
**caractérisé en ce que**
les chaînes (16) sont des chaînes à maillons.

11. Dispositif selon l'une des revendications 8 à 10,
**caractérisé en ce que**
les segments de longueur des chaînes (16) sont réalisés en une matière métallique inoxydable.

12. Dispositif selon l'une des revendications 8 à 11,
**caractérisé en ce que**
tous les segments de longueur ou plusieurs segments de longueur de chaînes (16) sont fixés au niveau de l'arête arrière du longeron (1) à l'aide d'un élément de fixation commun (6), permettant de détacher et de remplacer facilement.

13. Dispositif selon l'une des revendications 3 à 12,
**caractérisé en ce que**
sur l'arête arrière du longeron (1) et sur toute sa largeur on a plusieurs buses d'air (12) fournissant de l'air comprimé, et dont les orifices de sortie sont dirigés vers la surface (18) du sol.

14. Dispositif selon la revendication 13,
**caractérisé en ce que**
les buses d'air (12) sont en forme de fentes et sont réparties en plusieurs rangées décalées en quinconce.

15. Dispositif selon l'une des revendications 3 à 14,
**caractérisé en ce que**
le longeron (1) est monté sur un véhicule de travail.

16. Dispositif selon l'une des revendications 3 à 14,
**caractérisé en ce que**
le longeron (1) est muni d'un moyen de traction pour être guidé à la main.

17. Dispositif selon l'une des revendications 3 à 16,
**caractérisé en ce que**
le longeron (1) est réalisé en plusieurs parties sur toute sa largeur et les parties de longeron (1a, 1b, 1c) sont combinées en nombres différents ou pour former des largeurs globales différentes.

18. Dispositif selon la revendication 17,
**caractérisé en ce que**
les parties extérieures de longeron (1b, 1c) peuvent être couplées.

19. Dispositif selon la revendication 17 ou 18,
**caractérisé en ce que**
les parties de longeron (1a, 1b, 1c) ont des largeurs différentes.

20. Dispositif selon l'une des revendications 3 à 19,
**caractérisé en ce que**
le côté supérieur du longeron (1) est muni de poids (5).
